# EUROPEAN PATENT SPECIFICATION

(11) **EP 4 306 412 B1**
(45) Date of publication and mention of the grant of the patent: **04.11.2026**
(21) Application number: 23184000.0
(22) Date of filing: 06.07.2023
(51) Int. Cl.: B64D 11/06, B60N 2/34

(54) **SELF SUPPORTING BERTHING PLATFORM SYSTEM FOR AIRCRAFT SEATS**
SELBSTSTÜTZENDES LIEGEPLATTFORMSYSTEM FÜR FLUGZEUGSITZE
SYSTÈME DE PLATEFORME D'ACCOSTAGE AUTO-PORTANT POUR SIÈGES D'AÉRONEF

(30) Priority: 12.07.2022 IN 202241039909; 30.11.2022 US 202218072140
(43) Date of publication of application: 17.01.2024
(73) Proprietor: B/E Aerospace, Inc., Winston-Salem, NC 27105 (US)
(72) Inventor: KOUSTUBHAN, Arjun, Hyderabad (IN); KOTTEM, Raghavendra, Hyderabad (IN); OLESON, Michael L., Parkland, FL (US)
(74) Representative: Dehns

(56) References cited:
- US-A1- 2019 127 070
- US-B1- 10 065 535
- US-B2- 11 040 776
- US-B2- 11 059 589

## Description

### CROSS-REFERENCE TO RELATED APPLICATIONS

The present application claims the benefit of India Provisional Application No. 202241039909, entitled SELF SUPPORTING BERTHING PLATFORM FOR AIRCRAFT SEATS, filed on July 12, 2022.

### BACKGROUND

The build of the seat (and any included components within the build) may be required to meet guidelines and/or standards. For example, in select industries, the seat must be able to withstand load requirements, as set forth by the industry guidelines and/or standards.
US2019127070A1 relates to a slouching divan (e.g., couch) installable aboard an aircraft. The slouching aircraft divan transitions between discrete upright, slouched, and berthed configurations. The divan has a seatpan including rollers which travel along roller slots in frame rails connecting the front and rear legs. The back follower panel tracks with the seatpan along backrest slots, curving rearward as it tracks down to allow the back follower panel to track maximally forward, and the seatpan and backrest cushions to berth flat and parallel to the floor.
US11040776B2 relates to a divan (also referred to as a couch, lounge, settee or sofa) that may be converted into a bed. US11059589B2 relates to a multi-seat aircraft divan configured to be installed, for example, side-facing within an aircraft cabin.

### SUMMARY

A self-supporting berthing platform system for an aircraft seat is disclosed as recited in claim 1. In some embodiments the aircraft seat includes an aircraft seat frame including one or more seatback frames and a seat pan frame. The aircraft seat includes a self-supporting berthing platform system. The self-supporting berthing platform system includes a plurality of articulated panels, the plurality of articulated panels including a first panel coupled to a second panel via at least one hinge assembly, the plurality of articulated panels configured to pivot between at least one of an upright position and a berth position via an articulated mechanism. The self-supporting berthing platform system includes a hinge reinforcement assembly, the hinge reinforcement assembly including a first reinforcement member coupled to a portion of the first panel, the hinge reinforcement assembly further including a second reinforcement member coupled to a portion of the second panel, the hinge reinforcement assembly further including a flange coupled to an additional portion of the second panel, a portion of the first reinforcement member configured to overlap with a portion of the second reinforcement member. The self-supporting berthing platform system includes a panel reinforcement assembly. The panel reinforcement assembly includes a first panel reinforcement member coupled to a portion of the first panel and a portion of at least one of the one or more seatback frames. The panel reinforcement assembly includes a second panel reinforcement member sub-assembly coupled to a portion of the second panel, the second panel reinforcement member sub-assembly including at least one panel leg and at least one support block.

In some embodiments, the at least one hinge assembly may include a first leaf coupled to a portion of the first panel and a second leaf coupled to a portion of the second panel, the first leaf configured to mate with the second leaf.

In some embodiments, the flange may be coupled to a bottom surface of the second leaf and the second hinge reinforcement member is coupled to a top surface of the second leaf.

In some embodiments, the self-supporting berthing platform system may further include a panel frame sub-assembly including one or more framing members coupled to one or more edges of at least one the first panel or the second panel of the plurality of articulated panels.

In some embodiments, the at least one panel leg may include a fixed panel leg.

The at least one support block includes a rotatable support block configured to rotate via a rotation sub-assembly

In some embodiments, the rotation sub-assembly may include a ball plunger and a locking plate, the ball plunger configured to engage with one or more portions of the locking plate to secure the rotatable support block in at least one of a stowed position or a deployed position.

In some embodiments, the at least one panel leg may include at least one pivotable panel leg.

In some embodiments, the rotation sub-assembly may include a ball plunger and a locking plate, the ball plunger configured to engage with one or more portions of the locking plate to secure the rotatable support block in at least one of a stowed position or a deployed position.

In some embodiments, the at least one support block may include translatable support block configured to translate via a translation sub-assembly between at least a stowed position or a deployed position.

In some embodiments, the translation sub-assembly may include a slot-and-roller assembly including one or more slots and one or more rollers, the translatable support block configured to translate via the one or more rollers between the at least stowed position and deployed position.

In some embodiments, the articulated mechanism may include a spring-loaded gas spring.

In some embodiments, the articulated mechanism may include a roller coupled to a portion of the seatback frame.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A illustrates a perspective view of an aircraft seat, in accordance with one or more embodiments of the disclosure;
FIG. 1B illustrates a perspective view of an aircraft seat, in accordance with one or more embodiments of the disclosure;
FIG. 2 illustrates a simplified block diagram of a self-supporting berthing platform system, in accordance with one or more embodiments of the disclosure;
FIG. 3 illustrates a side view of a hinge reinforcement assembly of the self-supporting berthing platform system, in accordance with one or more embodiments of the disclosure;
FIG. 4A illustrates a perspective view of an aircraft seat including a front support sub-assembly of the self-supporting berthing platform system, in accordance with one or more embodiments of the disclosure;
FIG. 4B illustrates a side view of an aircraft seat including a front support sub-assembly of the self-supporting berthing platform system, in accordance with one or more embodiments of the disclosure;
FIG. 5A illustrates a perspective view of an aircraft seat including a front support sub-assembly of the self-supporting berthing platform system in a stowed position, in accordance with one or more embodiments of the disclosure;
FIG. 5B illustrates a perspective view of an aircraft seat including a front support sub-assembly of the self-supporting berthing platform system in a deployed position, in accordance with one or more embodiments of the disclosure;
FIG. 6A illustrates a perspective view of a rotatable block sub-assembly of the self-supporting berthing platform system in a stowed position, in accordance with one or more embodiments of the disclosure;
FIG. 6B illustrates a perspective view of a rotatable block sub-assembly of the self-supporting berthing platform system in a deployed position, in accordance with one or more embodiments of the disclosure;
FIG. 6C illustrates a cross-sectional view of a rotatable block sub-assembly of the self-supporting berthing platform system, in accordance with one or more embodiments of the disclosure;
FIG. 7A illustrates a perspective view of an aircraft seat including a front support sub-assembly of the self-supporting berthing platform system in a stowed position, in accordance with one or more embodiments of the disclosure;
FIG. 7B illustrates a perspective view of an aircraft seat including a front support sub-assembly of the self-supporting berthing platform system in a deployed position, in accordance with one or more embodiments of the disclosure;
FIG. 7C illustrates a side view of an aircraft seat including a front support sub-assembly of the self-supporting berthing platform system in a deployed position, in accordance with one or more embodiments of the disclosure;
FIG. 8A illustrates a top perspective view of the self-supporting berthing platform system including a panel frame sub-assembly, in accordance with one or more embodiments of the disclosure;
FIG. 8B illustrates a bottom perspective view of the self-supporting berthing platform system including a panel frame sub-assembly, in accordance with one or more embodiments of the disclosure;
FIG. 9A illustrates a side view of an aircraft seat including a pivot seat back mechanism, in accordance with one or more embodiments of the disclosure; and
FIG. 9B illustrates a perspective view of a pivot seat back mechanism of an aircraft seat, in accordance with one or more embodiments of the disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

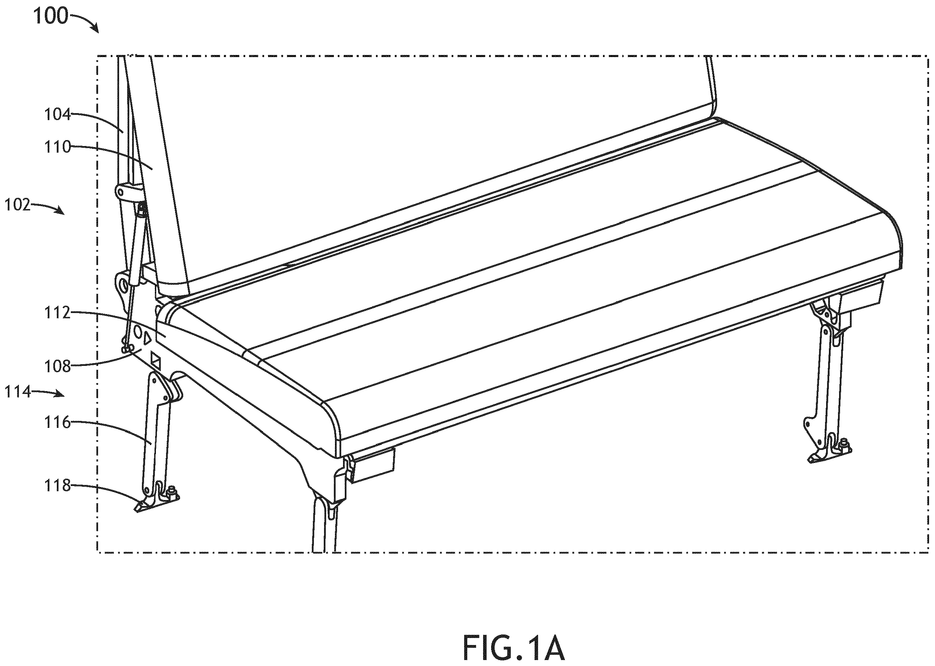

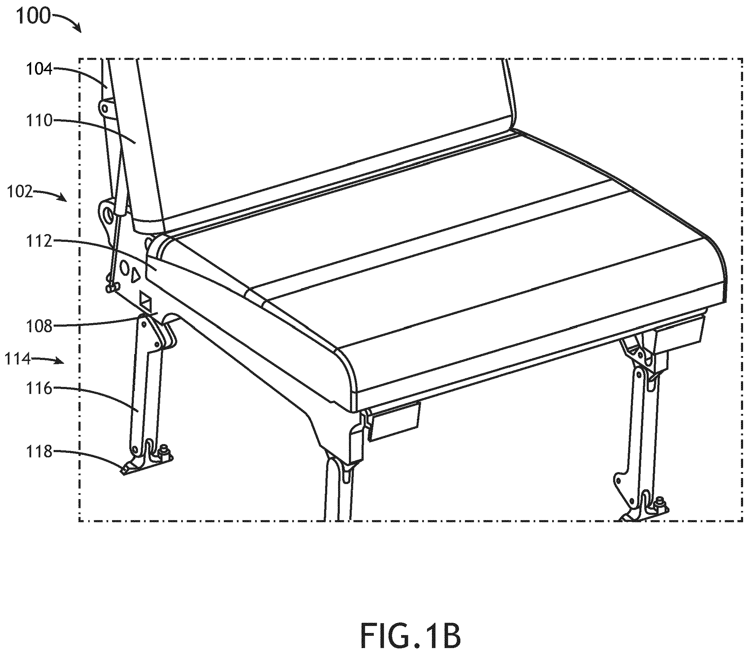

FIGS. 1A-9B in general illustrate a self-supporting berthing platform system, in accordance with one or more embodiments of the disclosure.

In select industries the build of the seat (and any included components within the build) may be required to meet guidelines and/or standards. For example, the aircraft seats may be required to meet aviation guidelines and/or standards. For instance, the select aircraft seats may need to be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), or any other standards setting organization or company; or any other guidelines agency or organization; or the like. The berthing platform of the aircraft seat may present difficulties such as, but not limited to, failing to meet load requirements, or the like as set forth by the FAA in 14 C.F.R. Part 25, AIRWORTHINESS STANDARDS: TRANSPORT CATEGORY AIRPLANES).

For example, a conventional berthing platform is often supported by surrounding aircraft structures to withstand load requirements as set forth by aviation guidelines and/or standards. If left unsupported, the structure may become damaged when a load is applied to the berthing platform.

As such, it would be desirable to provide a self-supporting berthing platform system for an aircraft seat. The self-supporting berthing platform system should meet aviation guidelines and/or standards. For example, the self-supporting berthing platform should meet load requirements as set forth by aviation guidelines and/or standards (e.g., gust loading, in-flight loads, abuse loads, and the like). The self-supporting berthing platform system should be self-sufficient when in the berthed position. For example, the self-supporting berthing platform system should eliminate the need for external supports on adjacent aircraft structures (e.g., cabinetry, armrests, bulkhead, and the like) when in the berthed position. In this regard, the self-supporting platform system may reduce the complexities that may arise during the integration and operation of the product in its intended environment, such as complexities with the certification process.

FIGS. 1A-2 illustrate an aircraft seat 100, in accordance with one or more embodiments of present disclosure.

The aircraft seat 100 may include a seat frame 102. The seat frame 102 may include one or more seatback frames 104, 106 and a seat pan frame 108. One or more of the seat back frames 104,106 and/or the seat pan frame 108 may be directly coupled, or indirectly coupled via one or more interconnecting components, to the seat frame 102.

The seatback frame 104 may include a seatback cushion 110. The seat pan frame 108 may include a seat pan cushion 112.

The aircraft seat 100 may include a base assembly 114. The base assembly 114 may include one or more legs 116. The one or more legs 116 may be coupled to a set of floor tracks of the aircraft cabin (via one or more floor fittings 118).

The aircraft seat 100 may be rotatable about an axis (e.g., swivelable) or translatable (e.g., trackable or slidable). The aircraft seat 100 may be rotatable about an axis cross-wise in the aircraft seat 100 into a position including, but not limited to, a stowed position or one or more deployed positions. The aircraft seat 100 may be fully positionable between the outer limits of motion as defined by the moveable components of the aircraft seat 100. Where the aircraft seat 100 is installed within an aisle, a walkway, a galley, and/or an entrance to/egress from the aircraft, the aircraft seat 100 may be fully positionable between the outer limits of motion as defined by surrounding interior structures within the aisle, the walkway, the galley, and/or the entrance to/egress from the aircraft. It is noted an upright or raised position may be considered a taxi, takeoff, or landing (TTL) position during select stages of flight (though the upright or raised position is not limited to use during the select stages of flight as the TTL position, but also may be used at any point during the flight), for purposes of the present disclosure. In addition, it is noted herein that any position that does not meet the above-defined requirements of the TTL position may be considered a non-TTL position, for purposes of the present disclosure. Further, it is noted the aircraft seat 100 may be actuatable (e.g., translatable and/or rotatable) from the TTL position to a non-TTL position, and/or vice versa. Further, it is noted the aircraft seat 100 may be capable of a fully upright or raised position, and that the TTL position may have a more reclined seatback cushion and a more angled upward seat pan cushion as compared to the fully upright or raised position. Therefore, the above description should not be interpreted as a limitation on the present disclosure but merely an illustration.

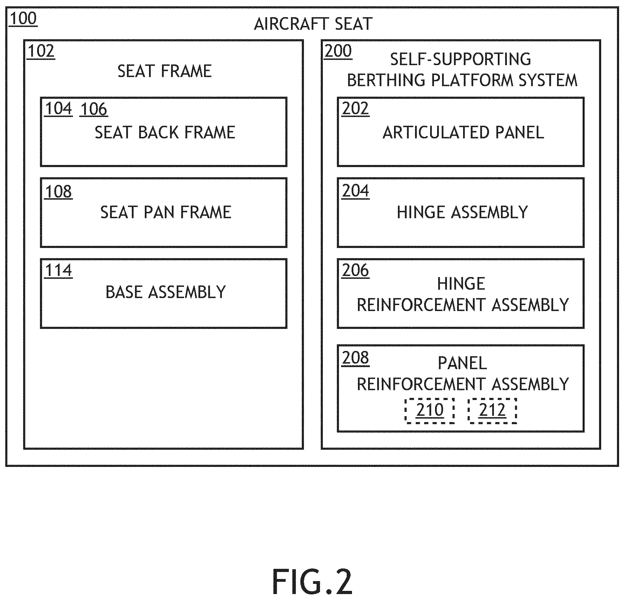

Referring generally to FIGS. 2-9B, the aircraft seat 100 includes a self-supporting berthing platform system 200.

The system 200 includes a plurality of articulated panels 202. The system 200 includes at least a first panel 202a (e.g., rear panel 202a) and an additional panel 202b (e.g., front panel 202b), where the first and second panels 202a, 202b are reversibly coupled together via one or more hinge assemblies 204. In this regard, the plurality of articulated panels 202 may be configured to actuate between at least a first position and a second position via the one or more hinge assemblies 204. For example, the plurality of articulated panels 202 may be configured to actuate between an upright position and a berth position.

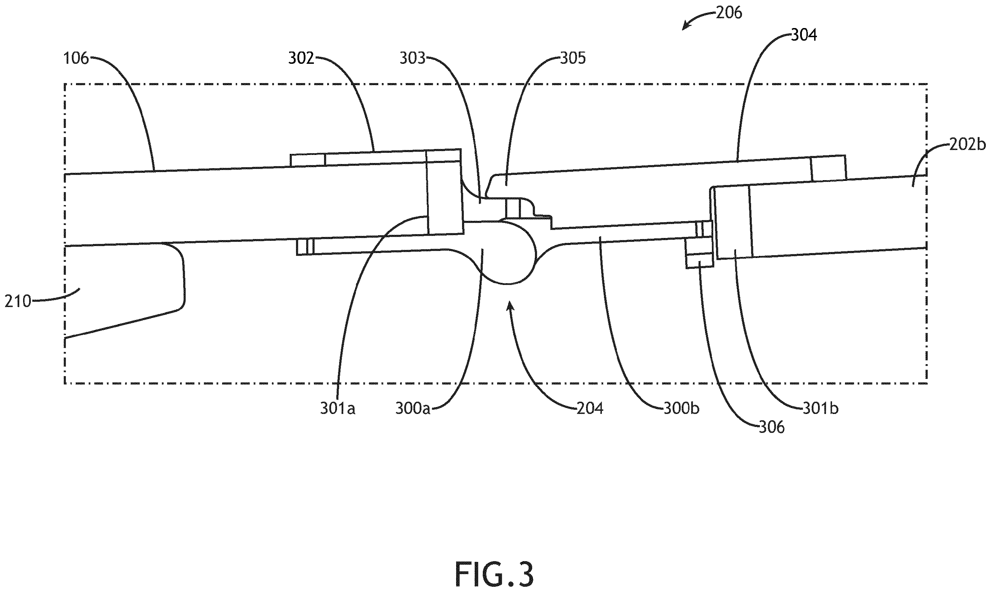

Referring to FIG. 3, each hinge assembly 204 may include at least a first leaf 300a coupled to a side 301a of the first articulated panel 202a (e.g., rear panel 202a) and a second leaf 300b coupled to a side 301b of an additional articulated panel 202b (e.g., front panel 202b). For example, the first leaf 300a may be configured to mate with a portion of the second leaf 300b, such that the articulated panels 202a, 202b may fold along the center axis of the hinge assembly 204 when actuated (e.g., folded).

The system 200 includes a hinge reinforcement assembly 206. For example, the system 200 may include a hinge reinforcement assembly 206 positioned proximate to the one or more hinge assembles 204. For instance, as shown in FIGS. 3-4B and 9A-9B, the hinge reinforcement assembly 206 may be coupled to a first side301a of the first articulated panel 202a (e.g., rear panel 202a) and a second side 301b of the additional articulated panel 202b (e.g., front panel 202b).

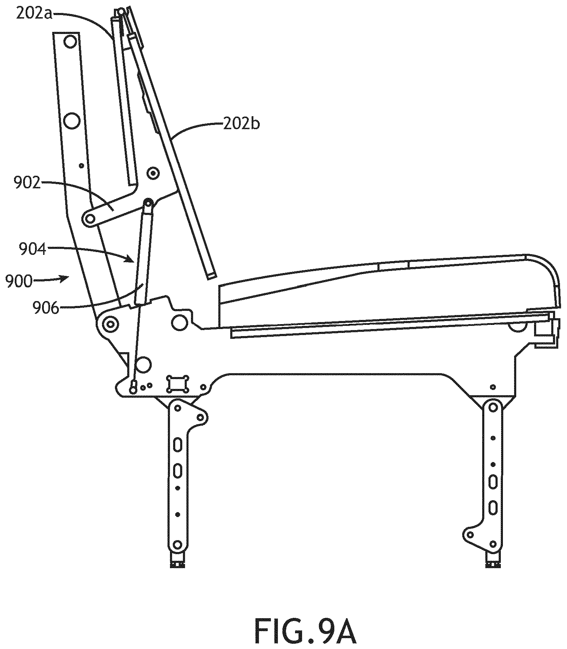

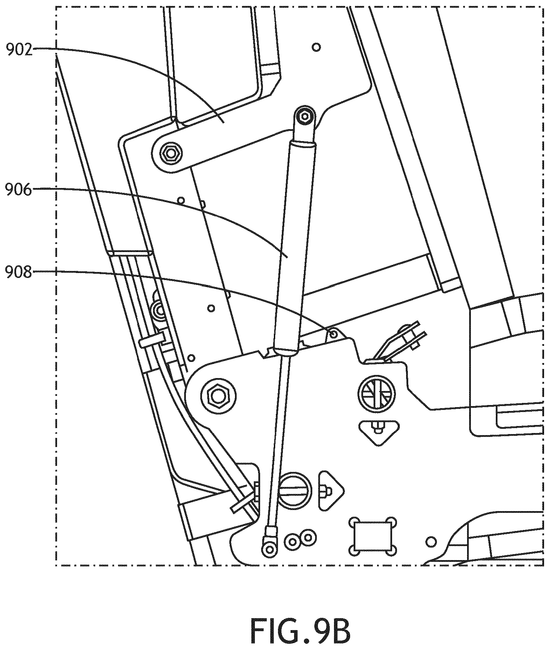

Referring to FIG. 3, the hinge reinforcement assembly 206 includes a first reinforcement portion 302 (e.g., rear panel reinforcement portion 302) coupled to a side 301a of the first articulated panel 202a (e.g., rear panel 202a). The hinge reinforcement assembly 206 includes a second reinforcement portion 304 (e.g., front panel reinforcement portion 304) coupled to a side 301b of the second articulated panel 202b (e.g., front panel 202b). The first reinforcement portion 302 may be positioned proximate to the second reinforcement portion 304. A portion 303 of the first reinforcement portion 302 overlaps with a portion 305 of the second reinforcement portion 304. In this regard, the overlapping portions 303, 305 are configured to transfer the load to the pivot arm (e.g., such as the pivot arm 902 shown in FIG. 9A).

The hinge reinforcement assembly 206 includes a flange portion 306 coupled to the side 301b of the second articulated panel 202b and a portion of the second leaf 300b of the hinge assembly 204. For example, the flange portion 306 may be coupled to a bottom surface of the second leaf 300b and the second reinforcement portion 304 may be coupled to a top surface of the second leaf 300b. In this regard, the flange portion 306 is configured to increase the bending strength of the system 200.

It is noted that the hinge reinforcement assembly 206 may be formed of any material such as, but not limited to, one or more metals, one or more composite materials, and the like.

Referring again to FIG. 2, the system 200 includes a panel reinforcement assembly 208. The panel reinforcement assembly 208 includes a first panel support member 210 (e.g., a rear panel support member 210) coupled to a side 401a of the first articulated panel (e.g., rear panel 202a) and to a portion of the seat back frame 104. The rear panel support member 210 may be coupled to the first articulated panel 202a via any coupling mechanism such as, but not limited to, one or more fasteners (e.g., screws, bolts, or the like), or the like. The panel reinforcement assembly 208 includes a front panel support sub-assembly 212 coupled to a side 401b of the second articulated panel (e.g., front panel 202b).

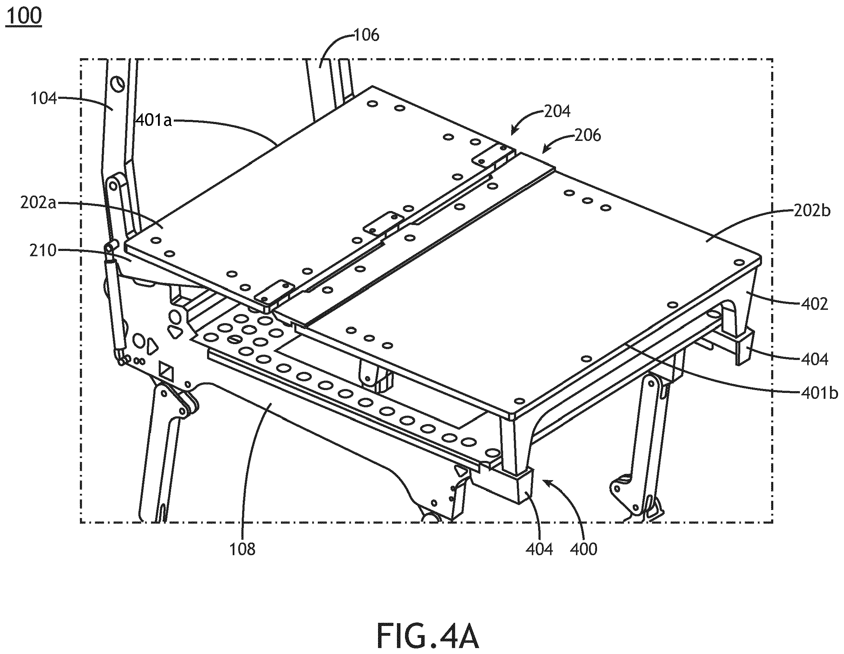

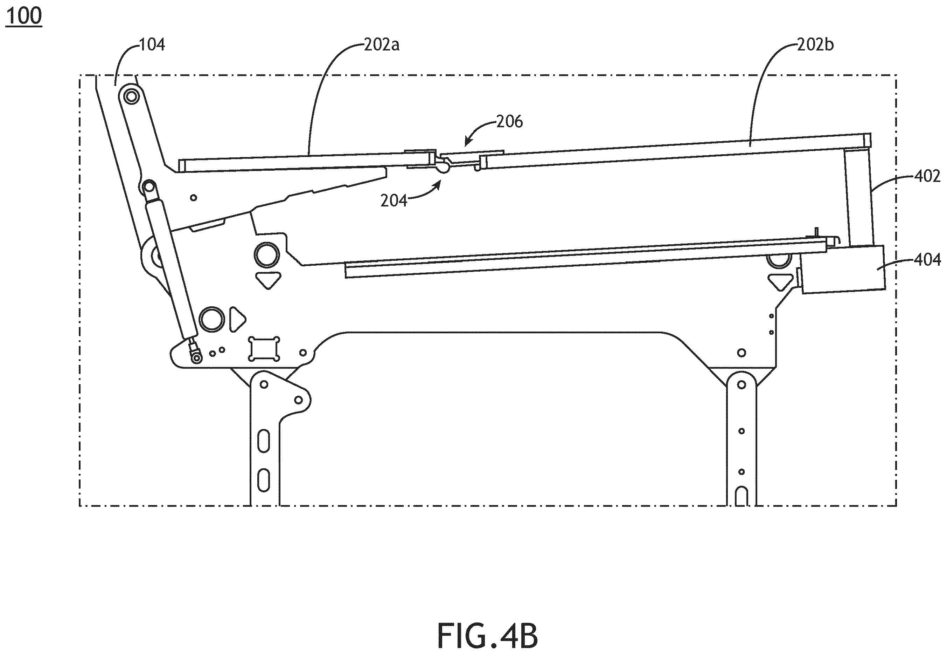

FIG. 4A illustrates a perspective view the aircraft seat 100 including a front support sub-assembly 400 of the self-supporting berthing platform system 200, in accordance with one or more embodiments of the disclosure. FIG. 4B illustrates a side view the aircraft seat 100 including the front support sub-assembly 400 of the self-supporting berthing platform system 200, in accordance with one or more embodiments of the disclosure.

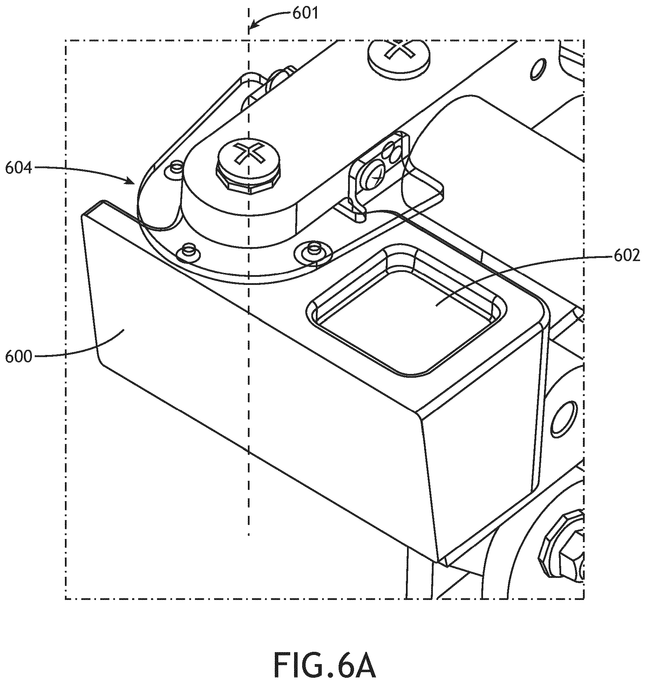

The front panel support sub-assembly 212 includes a front support sub-assembly 400 including a panel leg support member 402 and one or more rotatable support block sub-assemblies 404 (as discussed further herein with respect to FIGS. 6A-6C). The panel leg support member 402 is configured to couple to a bottom surface of the front panel 202b. The panel leg support member 402 is coupled to the front panel 202b via any coupling mechanism such as, but not limited to, one or more fasteners (e.g., screws, bolts, or the like), or the like.

When the one or more rotatable support block sub-assemblies 404 are in the deployed position (as shown in FIGS. 4A-4B), the panel support member 402 is supported by a portion of the one or more rotatable support block sub-assemblies 404. In this regard, when the panels 202 are in the berthed position, the front panel support sub-assembly 400 is configured to reinforce at least the front panel 202b when load is applied to the system 200 (or aircraft seat 100).

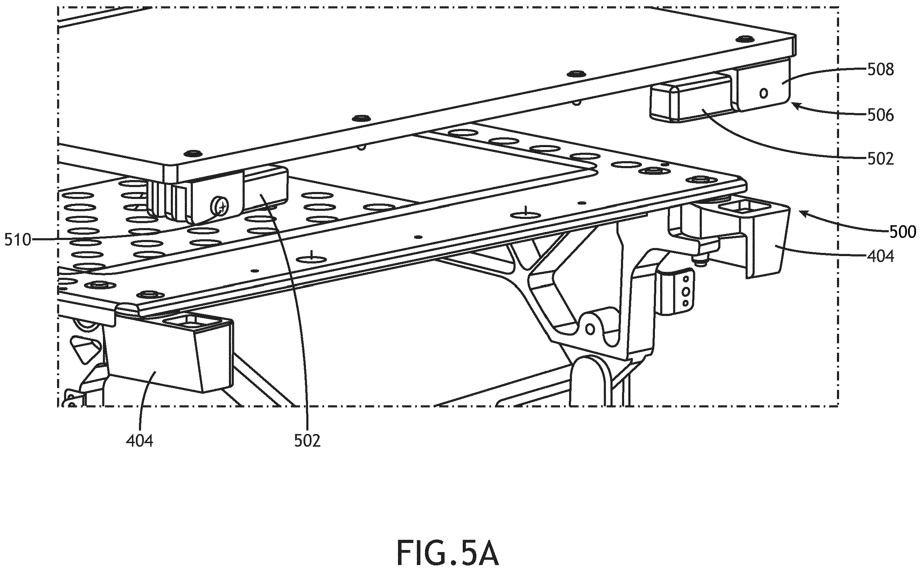

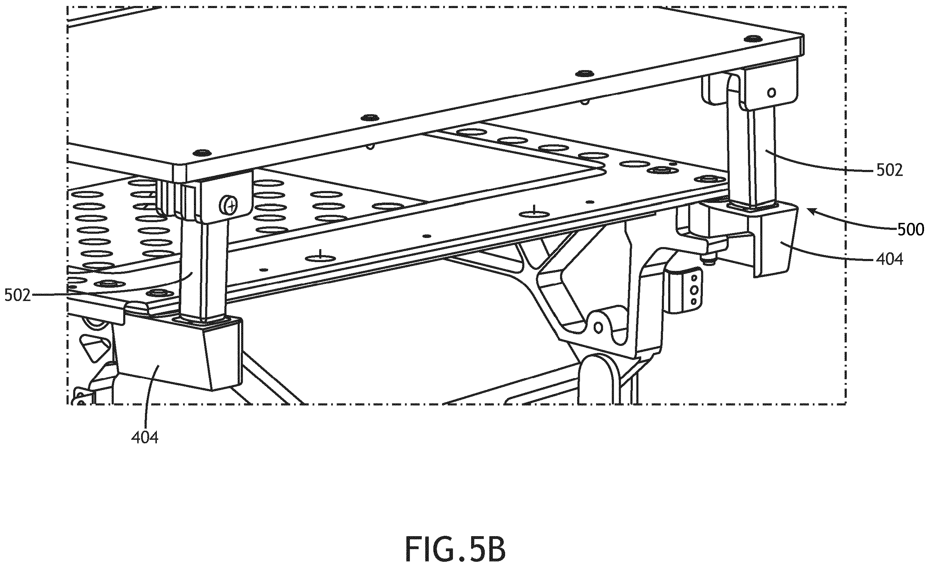

FIG. 5A illustrates a perspective view of the aircraft seat 100 including a front support sub-assembly 500 of the self-supporting berthing platform in a stowed position, in accordance with one or more embodiments of the disclosure. FIG. 5B illustrates a perspective view of the aircraft seat 100 including a front support sub-assembly 500 of the self-supporting berthing platform in a deployed position, in accordance with one or more embodiments of the disclosure.

The front panel support sub-assembly 212 includes a front support sub-assembly 500 including one or more pivotable legs 502 and one or more rotatable support block sub-assemblies 404 (as discussed further herein with respect to FIGS. 6A-6C). For example, a first pivotable leg 502 may be configured to couple to a first portion of the bottom surface of the front panel 202b and a second pivotable leg 502 may be configured to couple to a second portion of the bottom surface of the front panel 202b. The one or more rotatable legs 502 may be coupled to the front panel 202b via any coupling mechanism such as, but not limited to, one or more fasteners (e.g., screws, bolts, or the like), or the like.

Each pivotable leg 502 may be configured to pivot about an axis between a stowed position (as shown in FIG. 5A) and a deployed position (as shown in FIG. 5B) via a pivot mechanism sub-assembly 506. For example, the pivot mechanism sub-assembly 506 may include a bracket 508 and a fastener 510. For instance, the bracket 508 may be coupled to the bottom side of the front panel 202b and a top portion of the pivotable leg 502, where the fastener 510 pivotably couples the bracket 508 to the pivotable leg 502. In this regard, the pivotable leg 502 may be configured to pivot about an axis along the fastener 510 between the stowed and deployed position.

When the one or more rotatable support block sub-assemblies 404 are in the deployed position (as shown in FIGS. 5A-5B), the pivotable legs 502 are supported by a portion of the one or more rotatable support block sub-assemblies 404. In this regard, when the front panel 202b is in the berthed position, the one or more pivotable legs 502 and support block sub-assemblies 404 may be deployed to reinforce at least the front panel 202b when load is applied to the system 200 (or aircraft seat 100).

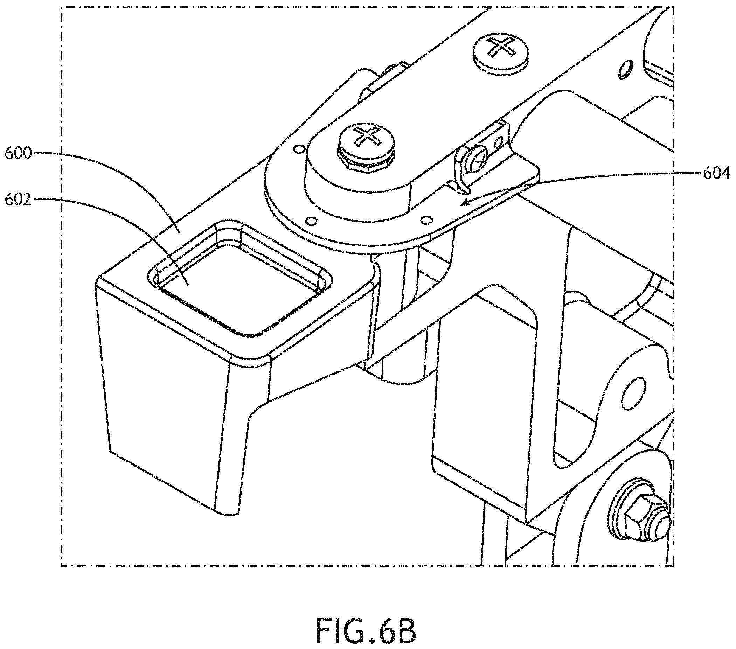

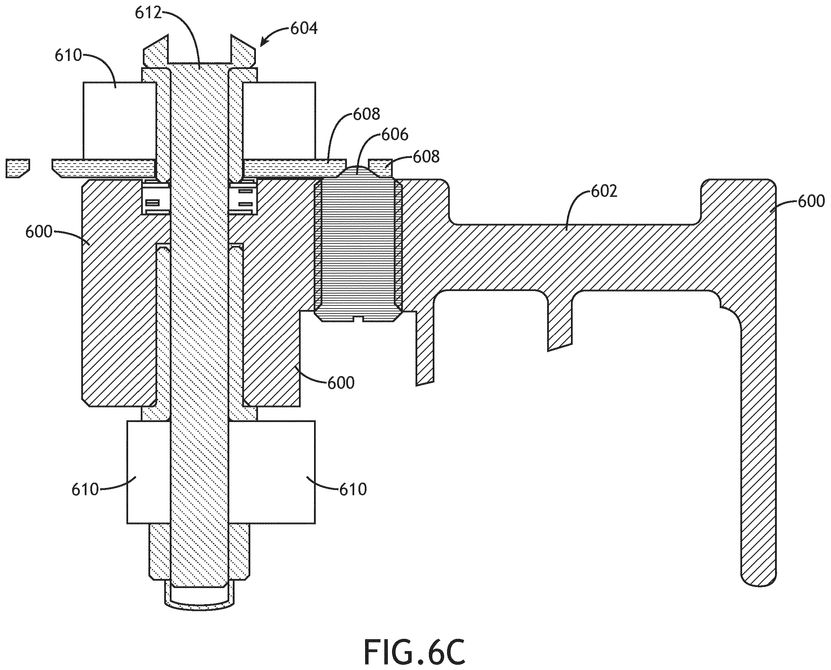

FIG. 6A illustrates a perspective view of the one or more rotatable support block sub-assemblies 404 of the self-supporting berthing platform system 200 in a stowed position, in accordance with one or more embodiments of the disclosure. FIG. 6B illustrates a perspective view of the one or more rotatable support blocks 404 of the self-supporting berthing platform system 200 in a deployed position, in accordance with one or more embodiments of the disclosure. FIG. 6C illustrates a cross-sectional view of the one or more rotatable support blocks 404 of the self-supporting berthing platform system 200, in accordance with one or more embodiments of the disclosure.

Each of the rotatable block sub-assemblies 404 includes a rotatable support block 600 including a cavity 602 and a rotation sub-assembly 604.

The rotatable block 600 is configured to rotatable about a pivot axis 601 between a stowed position (as shown in FIG. 6A) and a deployed position (as shown in FIG. 6B) via the rotation sub-assembly 604. For example, when in the deployed position, rotatable block 600 is configured to provide support for the leg (e.g., panel leg 402, pivotable leg 502, or the like). For instance, the cavity 602 of the rotatable support block 600 may be positioned proximate to the leg (e.g., panel leg 402, pivotable leg 502, or the like) to support the leg (e.g., panel leg 402, pivotable leg 502, or the like) in the deployed position.

Each rotation sub-assembly 604 may include, but is not limited to, a ball plunger 606, a locking plate 608, a bracket 610, and a fastener 612. For example, the ball plunger 606 may be configured to engage with one or more portions of the locking plate 608 to secure the block 600 to in at least one of a stowed position or a deployed position. In one instance, the ball plunger 606 may engage with a first portion of the locking plate 608 to secure the block 600 in a stowed position. In another instance, the ball plunger 606 may engage with a second portion of the locking plate 608 to secure the block 600 in a deployed position.

The bracket 610 may be configured to couple the rotation sub-assembly 604 to a portion of the seat pan frame via the fastener 612. For example, the bracket 610 may be configured to couple the rotation sub-assembly 604 to a bottom surface of the seat pan frame via the fastener 612.

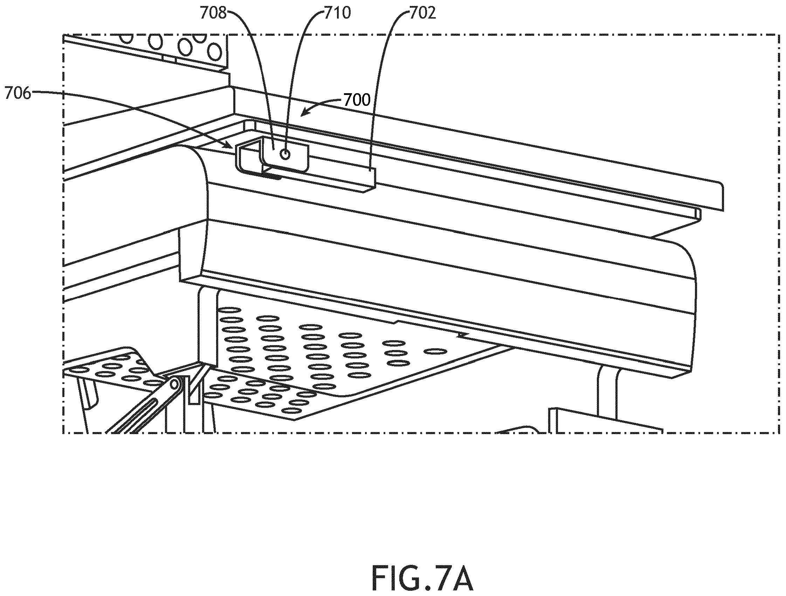

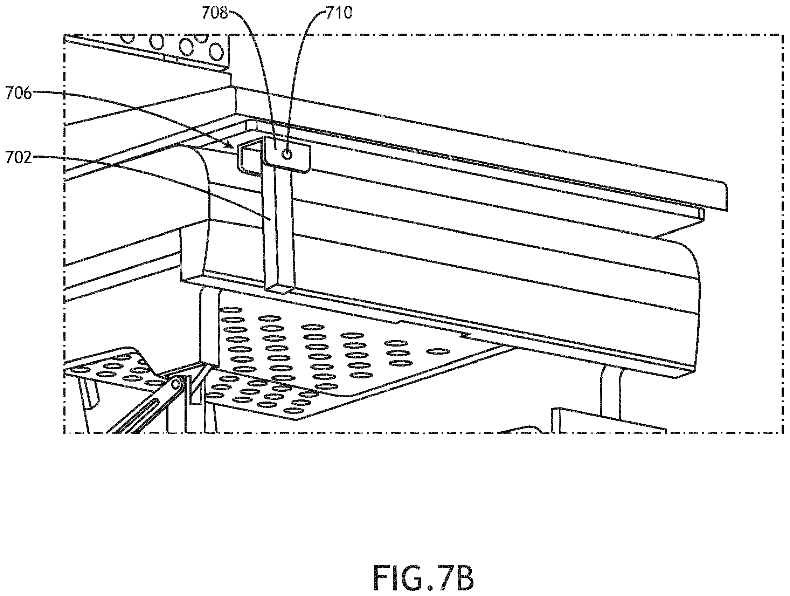

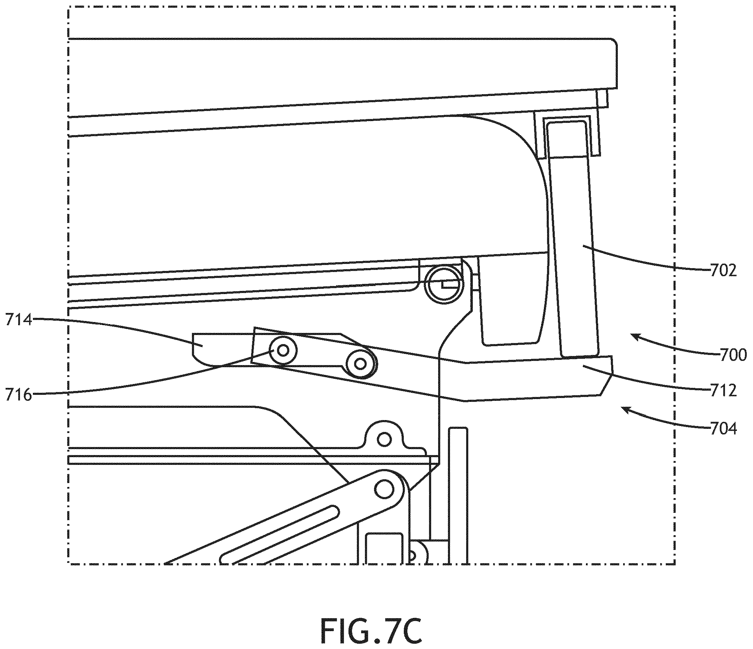

FIG. 7A illustrates a perspective view of the aircraft seat 100 including a front support sub-assembly 400 of the self-supporting berthing platform system 200 in a stowed position, in accordance with one or more embodiments of the disclosure. FIG. 7B illustrates a perspective view of the aircraft seat 100 including a front support sub-assembly 400 of the self-supporting berthing platform system 200in a deployed position, in accordance with one or more embodiments of the disclosure. FIG. 7C illustrates a side view of the aircraft seat 100 including a front support sub-assembly 400 of the self-supporting berthing platform system 200 in a deployed position, in accordance with one or more embodiments of the disclosure.

The front panel support sub-assembly 212 may include a front support sub-assembly 700 including one or more pivotable legs 702 and one or more translatable support block sub-assemblies 704 (as discussed further herein with respect to FIGS. 6A-6C). For example, a first pivotable leg 702 may be configured to couple to a first portion of the bottom surface of the front panel 202b and a second pivotable leg 702 may be configured to couple to a second portion of the bottom surface of the front panel 202b. The one or more pivotable legs 702 may be coupled to the front panel 202b via any coupling mechanism such as, but not limited to, one or more fasteners (e.g., screws, bolts, or the like), or the like.

Each pivotable leg 702 may be configured to pivot about an axis between a stowed position (as shown in FIG. 7A) and a deployed position (as shown in FIG. 7B) via pivot mechanism sub-assembly 706. For example, the pivot mechanism sub-assembly 706 may include a bracket 708 and a fastener 710. For instance, the bracket 708 may be coupled to the bottom side of the front panel 202b and a top portion of the pivotable leg 702, where the fastener 710 pivotably couples the bracket 708 to the pivotable leg 702. In this regard, the pivotable leg 702 may be configured to pivot about an axis along the fastener 710 between the stowed and deployed position.

Each translatable block sub-assembly 704 may include a support block 712 and slot-and-roller translation assembly including one or more slots 714 and one or more rollers 716. For example, the slot-and-roller translation assembly may be configured to translate the support block 712 between a stowed and deployed position. For instance, the support block 712 may translate via the rollers 716 to the deployed position to provide support for the pivotable leg 702 when in the deployed position.

When the one or more translatable support block sub-assemblies 704 are in the deployed position (as shown in FIGS. 7A-7B), the pivotable legs 702 may be supported by a portion of the one or more translatable support block sub-assemblies 704. In this regard, when the front panel 202b is in the berthed position, the one or more pivotable legs 702 and support block sub-assemblies 704 may be deployed to reinforce at least the front panel 202b when load is applied to the system 200 (or aircraft seat 100).

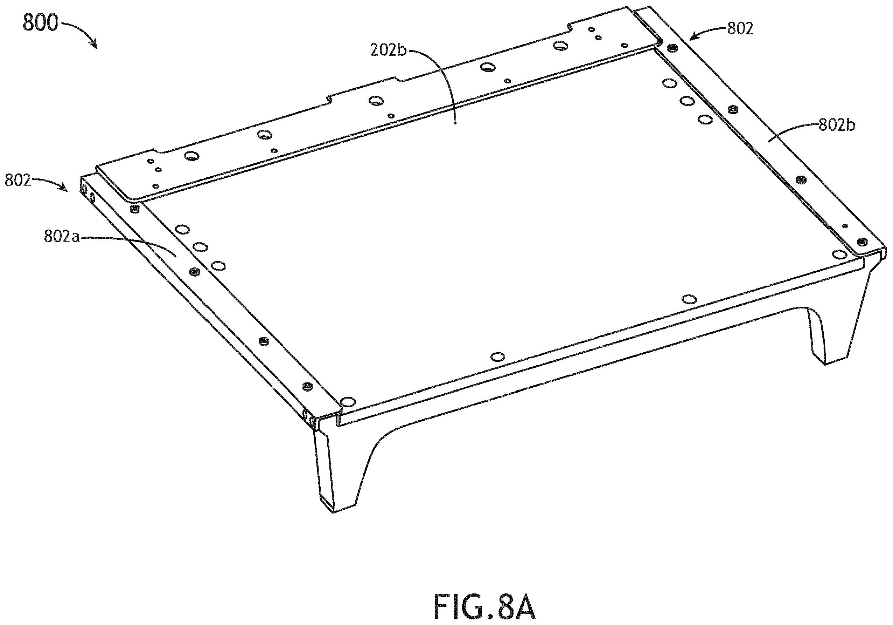

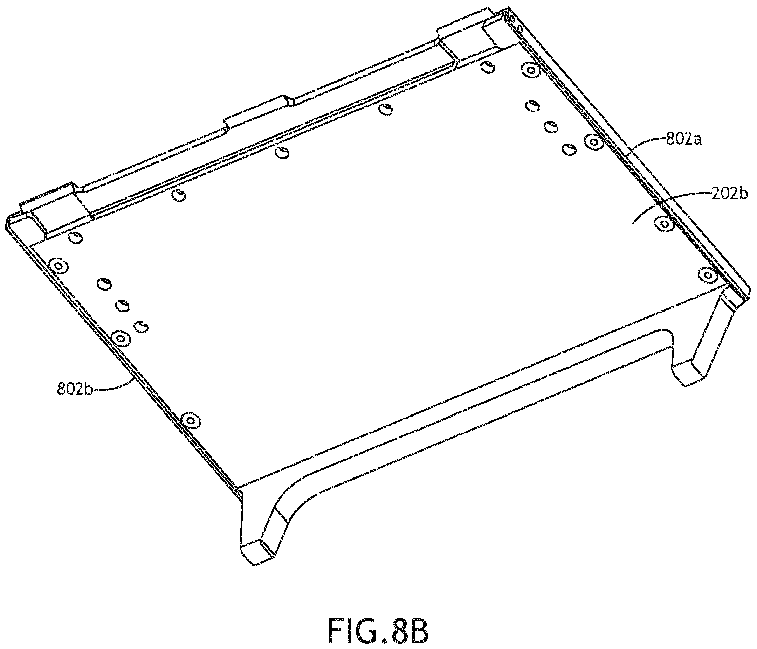

FIG. 8A illustrates a top perspective view of the self-supporting berthing platform system 200 including a panel frame sub-assembly 800, in accordance with one or more embodiments of the disclosure. FIG. 8B illustrates bottom perspective view of the self-supporting berthing platform system 200 including a panel frame sub-assembly 800, in accordance with one or more embodiments of the disclosure.

In some embodiments, the system 200 may include a panel frame sub-assembly 800. For example, the panel frame sub-assembly 800 include one or more framing members 802 coupled to one or more edges of the one or more articulated panels 202. For instance, as shown in FIGS. 8A-8B, the frame sub-assembly 800 may include a first framing member 802a coupled to a first edge (e.g., left edge) of the front articulated panel 202b and a second frame member 802b coupled to a second edge (e.g., right edge) of the front articulated panel 202b. The one or more framing members 802 may be coupled to the front panel 202b via any coupling mechanism such as, but not limited to, one or more fasteners (e.g., screws, bolts, or the like), or the like.

It is noted that the panel frame sub-assembly 800 may provide additional reinforcement to withstand high load requirements.

FIGS. 9A-9B illustrates a perspective view of an articulated seatback mechanism 900 of an aircraft seat 102, in accordance with one or more embodiments of the disclosure.

The articulated seatback mechanism 900 may include a pivot arm 902 and an actuator 904. For example, the pivot arm 902 may couple to a portion of the system 200 to cause the system 200 to actuate between the upright and berth position.

The actuator 904 may include any type of actuator. For example, as shown in FIGS. 9A-9B, the actuator 904 may include a gas spring 906, where a gas spring axis may be slightly oriented at a different angle than the axis line joining the arm pivot and gas spring fixed end. In this regard, the gas spring 906 may be configured to lock the seatback in a berthing position.

In some embodiments, the articulated seatback mechanism 900 may include a roller 908 configured to prevent the seatback from falling. For example, the seat frame 102 may include a roller 908 coupled to a portion of the seat frame 102.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. A self-supporting berthing platform system (200) for an aircraft seat, the self-supporting berthing platform system comprising:
a plurality of articulated panels (202), the plurality of articulated panels including a first panel (202a) coupled to a second panel (202b) via at least one hinge assembly (204), the plurality of articulated panels configured to pivot between at least one of an upright position and a berth position via an articulated mechanism (900);
a hinge reinforcement assembly (206), the hinge reinforcement assembly including a first reinforcement member (302) coupled to a portion of the first panel, the hinge reinforcement assembly further including a second reinforcement member (304) coupled to a portion of the second panel, the hinge reinforcement assembly further including a flange (306) coupled to an additional portion of the second panel to increase bending strength of the system (200), a portion (303) of the first reinforcement member configured to overlap with a portion (305) of the second reinforcement member, where the overlapping portions (303, 305) of the first reinforcement member and the second reinforcement member are configured to transfer a load to a pivot arm (902);
a panel reinforcement assembly (208), the panel reinforcement assembly comprising:
a rear panel support member (210) coupled to a portion of the first panel and configured to be coupled to a portion of at least one seatback frame of one or more seatback frames; and
a front panel support sub-assembly (212) coupled to a portion of the second panel, the front panel support sub-assembly includes at least one panel leg support member (402) and at least one rotatable support block sub-assembly (404), wherein the panel leg support member (402) couples to a bottom surface of the second panel (202b),
**characterised in that** the rotatable support block sub-assembly (404) includes a rotatable support block (600) including a cavity (602) and a rotation sub-assembly (604), wherein the rotatable support block is configured to be rotatable about a pivot axis (601) between a stowed position and a deployed position via the rotation sub-assembly,
when the rotatable support block sub-assembly is in the deployed position, the panel leg support member is supported by a portion of the rotatable support block sub-assembly to reinforce at least the second panel when a load is applied to the system (200).

2. An aircraft seat (100), the aircraft seat comprising:
an aircraft seat frame (102), the aircraft seat frame including one or more seatback frames (104) and a seat pan frame (106); and
the self-supporting berthing platform system (200) of claim 1.

3. The aircraft seat of Claim 2, wherein the at least one hinge assembly (206) comprises:
a first leaf (300a) coupled to a portion of the first panel (202a) and a second leaf (300b) coupled to a portion of the second panel, the first leaf configured to mate with the second leaf.

4. The aircraft seat of Claim 3, wherein the flange (306) is coupled to a bottom surface of the second leaf (300b) and the second hinge reinforcement member (304) is coupled to a top surface of the second leaf (300b).

5. The aircraft seat of any of Claims 2 to 4, further comprising:
a panel frame sub-assembly (800) including one or more framing members (802) coupled to one or more edges of at least one the first panel (202a) or the second panel (202b) of the plurality of articulated panels.

6. The aircraft seat of any of Claims 2 to 5, wherein the at least one panel leg support member (402) includes a fixed panel leg.

7. The aircraft seat of Claim 1, wherein the rotation sub-assembly (604) comprises:
a ball plunger (606); and
a locking plate (608), the ball plunger configured to engage with one or more portions of the locking plate to secure the rotatable support block in at least one of a stowed position or a deployed position.

8. The aircraft seat of any of Claims 2 to 7, wherein the at least one panel leg support member (402) includes at least one pivotable panel leg.

9. The aircraft seat of Claim 8, wherein the rotation sub-assembly (604) comprises:
a ball plunger (606); and
a locking plate (608), the ball plunger configured to engage with one or more portions of the locking plate to secure the rotatable support block in at least one of a stowed position or a deployed position.

10. The aircraft seat of Claim 8 or 9, wherein the at least one support block includes translatable support block (704) configured to translate via a translation sub-assembly between at least a stowed position or a deployed position.

11. The aircraft seat of Claim 10, wherein the translation sub-assembly comprises:
a slot-and-roller assembly including one or more slots (714) and one or more rollers (716), the translatable support block configured to translate via the one or more rollers between the at least stowed position and deployed position.

12. The aircraft seat of Claim 2, wherein the articulated mechanism includes a spring-loaded gas spring (906).

13. The aircraft seat of Claim 2, wherein the articulated mechanism includes a roller (908) coupled to a portion of the seatback frame (102).

## Patentansprüche

1. Selbststützendes Liegeplattformsystem (200) für einen Flugzeugsitz, wobei das selbststützende Liegeplattformsystem Folgendes umfasst:
eine Vielzahl von Gelenkpaneelen (202), wobei die Vielzahl von Gelenkpaneelen ein erstes Paneel (202a) beinhaltet, das über mindestens eine Scharnierbaugruppe (204) mit einem zweiten Paneel (202b) gekoppelt ist, wobei die Vielzahl von Gelenkpaneelen konfiguriert ist, um über einen Gelenkmechanismus (900) zwischen mindestens einer aufrechten Position und einer Liegeposition zu schwenken;
eine Scharnierverstärkungsbaugruppe (206), wobei die Scharnierverstärkungsbaugruppe ein erstes Verstärkungselement (302) beinhaltet, das mit einem Abschnitt des ersten Paneels gekoppelt ist, wobei die Scharnierverstärkungsbaugruppe ferner ein zweites Verstärkungselement (304) beinhaltet, das mit einem Abschnitt des zweiten Paneels gekoppelt ist, wobei die Scharnierverstärkungsbaugruppe ferner einen Flansch (306) beinhaltet, der mit einem weiteren Abschnitt des zweiten Paneels gekoppelt ist, um die Biegefestigkeit des Systems (200) zu erhöhen, wobei ein Abschnitt (303) des ersten Verstärkungselements konfiguriert ist, um sich mit einem Abschnitt (305) des zweiten Verstärkungselements zu überlappen, wobei die sich überlappenden Abschnitte (303, 305) des ersten Verstärkungselements und des zweiten Verstärkungselements konfiguriert sind, um eine Last auf einen Schwenkarm (902) zu übertragen;
eine Paneelverstärkungsbaugruppe (208), wobei die Paneelverstärkungsbaugruppe Folgendes umfasst:
ein hinteres Paneelstützelement (210), das mit einem Abschnitt des ersten Paneels gekoppelt ist und konfiguriert ist, um mit einem Abschnitt mindestens eines Rückenlehnenrahmens von einem oder mehreren Rückenlehnenrahmen gekoppelt zu werden; und
eine vordere Paneelstützunterbaugruppe (212), die mit einem Abschnitt des zweiten Paneels gekoppelt ist, wobei die vordere Paneelstützunterbaugruppe mindestens ein Paneelfuß-Stützelement (402) und mindestens eine drehbare Stützblock-Unterbaugruppe (404) beinhaltet, wobei das Paneelfuß-Stützelement (402) mit einer unteren Oberfläche des zweiten Paneels (202b) gekoppelt ist,
**dadurch gekennzeichnet, dass**
die drehbare Stützblock-Unterbaugruppe (404) einen drehbaren Stützblock (600), beinhaltend einen Hohlraum (602) und eine Drehunterbaugruppe (604), beinhaltet, wobei der drehbare Stützblock konfiguriert ist, um über die Drehunterbaugruppe um eine Schwenkachse (601) zwischen einer verstauten Position und einer ausgefahrenen Position drehbar zu sein,
wobei, wenn sich die drehbare Stützblock-Unterbaugruppe in der ausgefahrenen Position befindet, das Paneelfuß-Stützelement durch einen Abschnitt der drehbaren Stützblock-Unterbaugruppe gestützt wird, um mindestens das zweite Paneel zu verstärken, wenn eine Last auf das System (200) aufgebracht wird.

2. Flugzeugsitz (100), wobei der Flugzeugsitz Folgendes umfasst:
einen Flugzeugsitzrahmen (102), wobei der Flugzeugsitzrahmen einen oder mehrere Rückenlehnenrahmen (104) und einen Sitzflächenrahmen (106) beinhaltet; und
das selbststützende Liegeplattformsystem (200) nach Anspruch 1.

3. Flugzeugsitz nach Anspruch 2, wobei die mindestens eine Scharnierbaugruppe (206) Folgendes umfasst:
ein erstes Flügelelement (300a), das mit einem Abschnitt des ersten Paneels (202a) gekoppelt ist, und ein zweites Flügelelement (300b), das mit einem Abschnitt des zweiten Paneels gekoppelt ist, wobei das erste Flügelelement konfiguriert ist, um mit dem zweiten Flügelelement zusammenzupassen.

4. Flugzeugsitz nach Anspruch 3, wobei der Flansch (306) mit einer unteren Oberfläche des zweiten Flügelelements (300b) gekoppelt ist und das zweite Scharnierverstärkungselement (304) mit einer oberen Oberfläche des zweiten Flügelelements (300b) gekoppelt ist.

5. Flugzeugsitz nach einem der Ansprüche 2 bis 4, ferner Folgendes umfassend:
eine Paneelrahmen-Unterbaugruppe (800), beinhaltend ein oder mehrere Rahmenelemente (802), die mit einer oder mehreren Kanten von mindestens einem von dem ersten Paneel (202a) oder dem zweiten Paneel (202b) der Vielzahl von Gelenkpaneelen gekoppelt sind.

6. Flugzeugsitz nach einem der Ansprüche 2 bis 5, wobei das mindestens eine Paneelfuß-Stützelement (402) einen feststehenden Paneelfuß beinhaltet.

7. Flugzeugsitz nach Anspruch 1, wobei die Drehunterbaugruppe (604) Folgendes umfasst:
einen Kugelkolben (606); und
eine Verriegelungsplatte (608), wobei der Kugelkolben konfiguriert ist, um in einen oder mehrere Abschnitte der Verriegelungsplatte einzugreifen, um den drehbaren Stützblock in mindestens einer von einer verstauten Position oder einer ausgefahrenen Position zu sichern.

8. Flugzeugsitz nach einem der Ansprüche 2 bis 7, wobei das mindestens eine Paneelfuß-Stützelement (402) mindestens einen schwenkbaren Paneelfuß beinhaltet.

9. Flugzeugsitz nach Anspruch 8, wobei die Drehunterbaugruppe (604) Folgendes umfasst:
einen Kugelkolben (606); und
eine Verriegelungsplatte (608), wobei der Kugelkolben konfiguriert ist, um in einen oder mehrere Abschnitte der Verriegelungsplatte einzugreifen, um den drehbaren Stützblock in mindestens einer von einer verstauten Position oder einer ausgefahrenen Position zu sichern.

10. Flugzeugsitz nach Anspruch 8 oder 9, wobei der mindestens eine Stützblock einen verschiebbaren Stützblock (704) beinhaltet, der konfiguriert ist, um über eine Verschiebungsunterbaugruppe zwischen mindestens einer verstauten Position oder einer ausgefahrenen Position verschoben zu werden.

11. Flugzeugsitz nach Anspruch 10, wobei die Verschiebungsunterbaugruppe Folgendes umfasst:
eine Schlitz-und-Rollen-Baugruppe mit einem oder mehreren Schlitzen (714) und einer oder mehreren Rollen (716), wobei der verschiebbare Stützblock konfiguriert ist, um über die eine oder mehreren Rollen zwischen mindestens der verstauten Position und der ausgefahrenen Position verschoben zu werden.

12. Flugzeugsitz nach Anspruch 2, wobei der Gelenkmechanismus eine federbelastete Gasfeder (906) beinhaltet.

13. Flugzeugsitz nach Anspruch 2, wobei der Gelenkmechanismus eine Rolle (908) beinhaltet, die mit einem Abschnitt des Rückenlehnenrahmens (102) gekoppelt ist.

## Revendications

1. Système de plateforme de couchette autoportante (200) pour un siège d'aéronef, le système de plateforme de couchette autoportante comprenant :
une pluralité de panneaux articulés (202), la pluralité de panneaux articulés comportant un premier panneau (202a) accouplé à un second panneau (202b) via au moins un ensemble de charnière (204), la pluralité de panneaux articulés étant configurés pour pivoter entre au moins l'une d'une position verticale et d'une position de couchette via un mécanisme articulé (900) ;
un ensemble de renforcement de charnière (206), l'ensemble de renforcement de charnière comportant un premier élément de renforcement (302) accouplé à une partie du premier panneau, l'ensemble de renforcement de charnière comportant en outre un second élément de renforcement (304) accouplé à une partie du second panneau, l'ensemble de renforcement de charnière comportant en outre une bride (306) accouplée à une partie supplémentaire du second panneau pour augmenter la résistance à la flexion du système (200), une partie (303) du premier élément de renforcement étant configurée pour chevaucher une partie (305) du second élément de renforcement, dans lequel les parties chevauchantes (303, 305) du premier élément de renforcement et du second élément de renforcement sont configurées pour transférer une charge à un bras de pivot (902) ;
un ensemble de renforcement de panneau (208), l'ensemble de renforcement de panneau comprenant :
un élément de support de panneau arrière (210) accouplé à une partie du premier panneau et configuré pour être accouplé à une partie d'au moins un cadre de dossier d'un ou plusieurs cadres de dossier ; et
un sous-ensemble de support de panneau avant (212) accouplé à une partie du second panneau, le sous-ensemble de support de panneau avant comportant au moins un élément de support de pied de panneau (402) et au moins un sous-ensemble de bloc de support rotatif (404), dans lequel l'élément de support de pied de panneau (402) s'accouple à une surface inférieure du second panneau (202b),
**caractérisé en ce que**
le sous-ensemble de bloc de support rotatif (404) comporte un bloc de support rotatif (600) comportant une cavité (602) et un sous-ensemble de rotation (604), dans lequel le bloc de support rotatif est configuré pour être rotatif autour d'un axe de pivot (601) entre une position rangée et une position déployée via le sous-ensemble de rotation,
lorsque le sous-ensemble de bloc de support rotatif est en position déployée, l'élément de support de pied de panneau est soutenu par une partie du sous-ensemble de bloc de support rotatif pour renforcer au moins le second panneau lorsqu'une charge est appliquée au système (200).

2. Siège d'aéronef (100), le siège d'aéronef comprenant :
un cadre de siège d'aéronef (102), le cadre de siège d'aéronef comportant un ou plusieurs cadres de dossier (104) et un cadre d'assise (106) ; et
le système de plateforme de couchette autoportante (200) selon la revendication 1.

3. Siège d'aéronef selon la revendication 2, dans lequel l'au moins un ensemble de charnière (206) comprend :
une première lame (300a) accouplée à une partie du premier panneau (202a) et une seconde lame (300b) accouplée à une partie du second panneau, la première lame étant configurée pour s'accoupler avec la seconde lame.

4. Siège d'aéronef selon la revendication 3, dans lequel la bride (306) est accouplée à une surface inférieure de la seconde lame (300b) et le second élément de renfort de charnière (304) est accouplé à une surface supérieure de la seconde lame (300b).

5. Siège d'aéronef selon l'une quelconque des revendications 2 à 4, comprenant en outre :
un sous-ensemble de cadre de panneau (800) comportant un ou plusieurs éléments de cadre (802) accouplés à un ou plusieurs bords d'au moins l'un du premier panneau (202a) ou du second panneau (202b) de la pluralité de panneaux articulés.

6. Siège d'aéronef selon l'une quelconque des revendications 2 à 5, dans lequel au moins un élément de support de pied de panneau (402) comporte un pied de panneau fixe.

7. Siège d'aéronef selon la revendication 1, dans lequel le sous-ensemble de rotation (604) comprend :
un poussoir à bille (606) ; et
une plaque de verrouillage (608), le poussoir à bille étant configuré pour venir en prise avec une ou plusieurs parties de la plaque de verrouillage afin de fixer le bloc de support rotatif dans au moins l'une d'une position rangée ou d'une position déployée.

8. Siège d'aéronef selon l'une quelconque des revendications 2 à 7, dans lequel l'au moins un élément de support de pied de panneau (402) comporte au moins un pied de panneau pivotant.

9. Siège d'aéronef selon la revendication 8, dans lequel le sous-ensemble de rotation (604) comprend :
un poussoir à bille (606) ; et
une plaque de verrouillage (608), le poussoir à bille étant configuré pour venir en prise avec une ou plusieurs parties de la plaque de verrouillage afin de fixer le bloc de support rotatif dans au moins l'une d'une position rangée ou d'une position déployée.

10. Siège d'aéronef selon la revendication 8 ou 9, dans lequel l'au moins un bloc de support comporte un bloc de support déplaçable (704) configuré pour se déplacer via un sous-ensemble de déplacement entre au moins une position rangée ou une position déployée.

11. Siège d'aéronef selon la revendication 10, dans lequel le sous-ensemble de déplacement comprend :
un ensemble fente-galet comportant une ou plusieurs fentes (714) et un ou plusieurs galets (716), le bloc de support déplaçable étant configuré pour se déplacer via les un ou plusieurs galets entre l'au moins une position rangée et une position déployée.

12. Siège d'aéronef selon la revendication 2, dans lequel le mécanisme articulé comporte un ressort à gaz (906).

13. Siège d'aéronef selon la revendication 2, dans lequel le mécanisme articulé comporte un galet (908) accouplé à une partie du cadre de dossier (102).
